# EUROPÄISCHE PATENTSCHRIFT

(11) **EP 2 263 855 B1**
(45) Veröffentlichungstag und Bekanntmachung des Hinweises auf die Patenterteilung: **06.11.2013**
(21) Anmeldenummer: 10175942.1
(22) Anmeldetag: 19.12.2008
(51) Int. Cl.: B29C 49/42, B29C 49/56, B29C 49/12, B29C 49/36, B29C 49/58, B29C 47/12, B29C 49/06

(54) **Elektrisch betriebene Blasformmaschine und das Verfahren**
Electrically operated blow-moulding machine and the method
Machine de formage par soufflage entraînée de manière électrique et le procédé

(43) Veröffentlichungstag der Anmeldung: 22.12.2010
(62) Teilanmeldung aus: 08022103.9
(73) Patentinhaber: Krones AG, 93073 Neutraubling (DE)
(72) Erfinder: Voth, Klaus, 93083, Obertraubling (DE); Blochmann, Erik, 93073, Neutraubling (DE); Winzinger, Frank, 85354 Freising (DE)
(74) Vertreter: Bittner, Bernhard

(56) Entgegenhaltungen:
- EP-A- 0 913 244
- EP-A- 1 366 885
- WO-A1-02/081180
- AT-B- 412 542
- DE-A1- 19 528 751
- DE-A1-102006 023 905
- DE-A1-102007 008 023
- DE-B3- 10 253 555
- FR-A- 2 737 436
- US-A- 5 975 881
- US-A1- 2004 155 386
- US-A1- 2008 131 551
- DATABASE WPI Week 200272 Thomson Scientific, London, GB; AN 2002-669293 XP002543274, -& JP 2002 166467 A (TAHARA KK) 11. Juni 2002 (2002-06-11)
- DATABASE WPI Week 199840 Thomson Scientific, London, GB; AN 1998-461425 XP002543273, -& JP 10 193445 A (KYORAKU CO LTD) 28. Juli 1998 (1998-07-28)
- DATABASE WPI Week 200031 Thomson Scientific, London, GB; AN 2000-358554 XP000002658163, -& JP 2000 117825 A (NISSEI ASB MACHINE CO LTD) 25. April 2000 (2000-04-25)

## Beschreibung

Die vorliegende Erfindung bezieht sich auf eine Vorrichtung zum Umformen von Kunststoffvorformlingen zu Kunststoffbehältnissen und insbesondere eine Streckblasmaschine. Derartige Streckblasmaschinen sind aus dem Stand der Technik seit langem bekannt. Dabei wird ein umzuformender Kunststoffvorformling in eine Blasform gegeben und anschließend, beispielsweise mittels Druckluft, gegen eine Wandung dieser Blasform zu einem Kunststoffbehältnis expandiert.

Der gesamte Blasvorgang ist dabei relativ aufwändig und von einer Vielzahl von Arbeitsschritten begleitet. So werden beispielsweise Blasformhälften um den Vorformling geschlossen und üblicherweise auch eine Bodenplatte an diese Blasformhälften herangeführt. Weiterhin wird eine Blasdüse an die Mündung des Vorformlings herangeführt, welche anschließend den Vorformling mit Druckluft beaufschlagt. Daneben ist es üblicherweise auch erforderlich, die Blasform um den Kunststoffvorformling zu verriegeln.

Diese gesamten mechanischen Bewegungen werden dabei im Stand der Technik von Formkurven bzw. Führungskurven durchgeführt. Diese Führungskurven bieten den Vorteil, dass ein genau vorbestimmter Bewegungsablauf der einzeln beschriebenen Bewegungen durchgeführt werden kann und auch bei hohen Arbeitsgeschwindigkeiten ein zuverlässiger Blasvorgang möglich ist.

Weiterhin ist es aus dem Stand der Technik bekannt, die Vorformlinge zusätzlich mit einer Reckstange in ihrer Längsrichtung zu dehnen. Dabei wird diese Reckstange während des eigentlichen Vorgangs in den Kunststoffvorformling eingeführt und dehnt und diesen in seiner Längsrichtung. In diesem Fall ist eine genaue zeitliche Abstimmung mit den oben genannten mechanischen Vorgängen nicht erforderlich, dafür jedoch eine genaue zeitliche Abstimmung mit der Druckluftbeaufschlagung in dem Kunststoffvorformling.

Aus der US 5,269,672 ist eine Servoreckanordnung für Blasformmaschinen bekannt. Dabei wird eine Reckstange von einem Servomotor angetrieben, um eine genaue und wiederholbare Streckbewegung zu erreichen.

Die US 4,128,383 beschreibt eine Vorrichtung zum Kontrollieren einer Kunststoffmaterialverteilung bei der Herstellung von Kunststoffbehältnissen.

Aus der DE 10 2007 008 023 A1 sind ein Verfahren und eine Vorrichtung zur Blasumformung von Behältern bekannt. Dabei erfolgt hier eine Vorgabe der Positionierung einer Reckstange unter Verwendung eines elektromechanischen Reckstangenantriebs, wobei eine Drehbewegung einer Motorwelle eines Servomotors durch eine mechanische Kopplungseinrichtung in eine Hubbewegung der Reckstange transformiert wird.

Aus der DE 600 03 238 T2 ist eine Rotationsstreckblasmaschine mit einem magnetisch angetriebenen Streckhelfer bekannt. Genauer werden bei den heute bekannten Blasstationen, wie oben erwähnt, die einzelnen Vorgänge über Kurven angesteuert, beispielsweise eine Bodenform über eine außenliegende Kurve hochgefahren, anschließend die Formträgerhälften über eine Kurve verschlossen und sobald diese aneinander liegen, werden die Formträgerhälften über einen Verriegelungsmechanismus verriegelt wobei der Vorgang ebenfalls von einer Kurve vollzogen wird. Schließlich wird in diesem Zustand über eine weitere Kurve ein Blaskolben auf die Form abgesenkt, d. h. die Blasform wird gegenüber einem Hochdruckventil abgedichtet. Sobald der Blaskolben bzw. die Blasdüse auf der Blasform angeordnet ist wird der Reckvorgang über eine weitere Kurve eingeleitet.

Weitere Vorrichtungen und Verfahren werden in AT 412542 und JP 2000 11 7825 beschrieben.

Der vorliegenden Erfindung liegt die Aufgabe zugrunde, eine Vorrichtung und ein Verfahren zum Umformen von Kunststoffvorformlingen zur Verfügung zu stellen, wobei eine Energie einsparung möglich ist.

Die Aufgabe wird mit einer Vorrichtung und mit einem Verfahren nach den Ansprüchen 1 und 13 gelöst.

Erfindungsgemäß weist wenigstens eine Antriebseinrichtung zum Bewegen wenigstens eines der Verschlusselemente zum Überführen der Blasform zwischen dem geschlossenen Zustand und dem geöffneten Zustand und/oder wenigstens eine Antriebseinrichtung zum Betreiben einer Behandlungseinheit zum Behandeln der Vorformlinge während des Umformungsvorgangs eine elektrische Antriebseinrichtung und insbesondere einen Elektromotor auf.

Unter einer Behandlungseinheit zum Behandeln der Behältnisse wird jede Einrichtung verstanden, welche auf die Behältnisse in vorbestimmter Weise einwirkt, wie beispielsweise eine Blasdüse, welche die Behältnisse mit Luft beaufschlagt, eine Recktstange zum Dehnen der Vorformlinge bzw. deren Antriebseinheiten oder auch eine Transporteinrichtung wie eine Greifklammer zum Transportieren der Vorformlinge oder der fertig gestellten Behältnisse.

Unter dem Umformungsvorgang wird über den eigentlichen physikalischen Ausdehnungsprozess hinaus der gesamte Behandlungsvorgang, ausgehend vom Einführen der Vorformlinge in die Umformungseinheit bis hin zum Abtransportieren der fertig umgeformten Behältnisse aus der Umformungseinheit verstanden.

Es wird damit vorgeschlagen, dass wenigstens eines der besagten Elemente zum Überführen der Blasform zwischen einem geöffneten Zustand und einem geschlossenen Zustand oder auch zum Behandeln der Behältnisse von einer elektrischen Antriebseinrichtung betrieben wird. Es ist jedoch auch möglich, dass sowohl Elemente zum Überführen der Blasform zwischen einem geöffneten Zustand und einem geschlossenen Zustand als auch Elemente zum Behandeln der Behältnisse von einer elektrischen Antriebseinrichtung betrieben werden.

Diesen erfinderischen Ausgestaltungen liegt dabei jeweils das gemeinsame Konzept zugrunde, dass Elemente der Umformungsvorrichtung durch elektrische Antriebe gesteuert werden.

Bevorzugt verschließen dabei die genannten Verschlusselemente die Blasform bzw. den Hohlraum vollständig. Dabei handelt es sich vorteilhaft bei dem ersten und dem zweiten Formteil um zwei Formhälften, die beispielsweise um eine gemeinsame Achse gegeneinander verschwenkt und auf diese Weise zusammen oder auseinander geklappt werden können. Bei der Blasdüseneinrichtung handelt es sich insbesondere nicht nur um die Blasdüse selbst, welche das Behältnis mit Druckluft beaufschlagt sondern daneben auch um Abdichtungseinrichtungen, welche die Blasform in Richtung der Blasdüse beispielsweise nach oben hin abdichten. Unter einer Antriebseinrichtung wird dabei eine Einrichtung verstanden, welche ein anderes Element, hier die Bestandteile der Blasform antreibt bzw. bewegt.

Erfindungsgemäß ist vorgegeben, dass eine dieser Antriebseinrichtungen eine elektrische Antriebseinrichtung ist und bevorzugt einen Motor und insbesondere einen Elektromotor aufweist. Dies bedeutet, dass hier wenigstens eines der genannten Verschlusselemente nicht mit Hilfe einer Führungskurve und damit allenfalls mittelbar über einen Antrieb der Blasform bewegt wird sondern dass die Antriebseinrichtung selbst unabhängig von einer Führungskurve ist und eine elektrische Antriebseinrichtung und insbesondere ein (Elektro) -motor die jeweilige Bewegung durchführt.

Allgemein können jedoch elektrische Antriebseinrichtungen vorgesehen sein, sodass es auch möglich wäre, neben oder anstelle eines Elektromotors elektrische Elemente wie Elektromagneten, Piezomotoren und dergleichen vorzusehen. Unter der Antriebseinrichtung wird dabei nicht nur der Elektromotor selbst verstanden, sondern beispielsweise auch ein Gestänge oder Kraftübertragungsmittel, welche eine Antriebskraft des Motors oder allgemein der elektrischen Antriebseinrichtung auf das jeweilige Verschlusselement übertragen.

Bei einer weiteren vorteilhaften Ausführungsform umfassen die Verschlusselemente auch ein Bodenteil, welches gegenüber den Formteilen bewegbar ist und insbesondere in einer Längsrichtung der zu expandierenden Behältnisse bewegbar ist, um den Hohlraum an eine Richtung abzuschließen. Weiterhin ist auch wenigstens eine dritte Antriebseinrichtung zum Bewegen dieses Bodenteils vorgesehen. Damit wird der Hohlraum insgesamt abgeschlossen durch die besagten Formteile, die Blasdüseneinrichtung sowie das Bodenteil. Bevorzugt wird dabei das Bodenteil auf die Formteile zubewegt, es wäre jedoch auch möglich, umgekehrt die Formteile auf das Bodenteil zuzubewegen.

Weiterhin umfassen bevorzugt die Verschlusselemente auch eine Verriegelungseinrichtung, welche die Formteile in einen geschlossenen Zustand der Blasform miteinander verriegelt und auch eine vierte Antriebseinrichtung zum Bewegen dieser Verriegelungseinrichtung. Damit werden insbesondere während des Expansionsvorganges auch die beiden Formteile gegeneinander verriegelt, sodass sich auch unter hohem Drücken diese beiden Formteile nicht gegeneinander öffnen können.

Bei einer weiteren vorteilhaften Ausführungsform weisen wenigstens zwei Antriebseinrichtungen zum Bewegen der Verschlusselemente zum Überführen der Blasform zwischen dem geschlossenen Zustand und dem geöffneten Zustand jeweils einen (Elektro) -motor auf. Dabei sind vorzugsweise wenigstens zwei unabhängig voneinander steuerbare Elektromotoren vorgesehen, wodurch eine höhere Anpassungsfähigkeit einer entsprechenden Anlage erreicht wird.

Es wird dabei darauf hingewiesen, dass unter dem Terminus Überführen von einem geschlossenen Zustand und einem geöffneten Zustand auch der umgekehrte Vorgang umfasst wird, d. h. dass das Überführen von einem geöffneten Zustand und einem geschlossenen Zustand. Auch werden unter dieser Bezeichnung Vorgänge verstanden, die beispielsweise von einem geschlossenen Zustand zu einem halbgeöffneten Zustand oder von einem geöffneten Zustand zu einem halbgeöffneten Zustand der Blasform führen.

Bei einer weiteren vorteilhaften Ausführungsform sind wenigstens drei Antriebseinrichtungen zum Bewegen der Verschlusselemente zum Überführen der Blasform zwischen dem geschlossenen Zustand und dem geöffneten Zustand jeweils mit einem (Elektro) -motor versehen. Vorteilhaft werden wenigstens vier Verschlusselemente mittels eines Elektromotors gegeben.

Diese Vorgehensweise ist zunächst keinesfalls selbstverständlich, da das im Stand der Technik bekannte Vorsehen von Führungskurven sich bewährt hat und zu sehr präzisen Öffnungs- und Schließvorgängen der Blasform führt. Lediglich unter Berücksichtigung der Notwenigkeit, derartige Anlagen öfter umzustellen kann es sinnvoll sein, ein oder mehrere der Verschlusselemente mit Elektromotoren auszustatten.

Weiterhin kann es jedoch auch vorteilhaft sein, einige der Verschlusselemente mechanisch, d. h. mittels Hubkurven zu betätigen und andere mittels Elektromotoren.

Bei einer weiteren vorteilhaften Ausführungsform weist die Vorrichtung einen elektrisch betriebenen Druckmechanismus auf, um die Blasform mechanisch zu belasten. Aus dem Stand der Technik ist es bekannt, dass die Blasform zwischen den beiden oben genannten Formteilen angeordnet ist. Weiterhin ist im Inneren der Formteile ein Druckkissen vorgesehen, welches bewirkt, dass bei geschlossenen Formteilen die Blasform im Inneren der Formteile zusätzlich zusammengepresst wird. In dieser Ausführungsform wird vorgeschlagen, dass dieser Pressvorgang der Blasform im Inneren der Formteile ebenfalls durch einen elektrischen Antrieb, beispielsweise unter Verwendung von Magneten oder durch einen elektrisch betriebenen Kniehebel erfolgt. Dieser elektrisch betriebene Druckmechanismus stellt damit ebenfalls ein Verschlusselement dar, um die Blasform zwischen einem geöffneten Zustand und einem (vollständig) geschlossenen Zustand zu überführen. So wäre es möglich, dass die Blasformhälften durch Anziehung durch einen Elektromagneten geschlossen gehalten werden oder die Blasformhälften durch einen Servoantrieb über einen Hebelmechanismus zusammengepresst werden.

Bei einer weiteren vorteilhaften Ausführungsform weist wenigstens eine Behandlungseinheit zum Behandeln der Vorformlinge im Rahmen des Umformungsvorgangs eine Reckstange zum Recken der Kunststoffvorformlinge auf, wobei diese Reckstange in einer vorgegebenen Bewegungsrichtung bewegbar ist und ein Anschlagelement vorgesehen ist, welches eine Endstellung dieser Reckstange in der Bewegungsrichtung vorgibt, wobei dieses Anschlagelement in der Bewegungsrichtung der Reckstange verstellbar ist. Dieses Anschlagelement dient dazu, um zu vermeiden, dass die Reckstange während des Umformungsvorgangs zu weit abgesenkt wird und ggfs. den Vorformling oder den Formboden beschädigt. Damit legt dieses Anschlagelement insbesondere eine untere Stellung der Reckstange fest, bzw. diejenige Stellung, die den vollständig gereckten Zustand des Behältnisses repräsentiert.

Diese untere Stellung der Reckstange hängt dabei auch davon ab, welche Behältnisgattung umgeformt werden soll, etwa ein 0,31 Behältnis oder ein 0,51 Behältnis unterschiedlicher Höhe. Um diese unterschiedlichen Entstellungen zu bewerkstelligen, sind im Stand der Technik Anschlagstücke vorgesehen, Wenn diese Anschlagstücke in die Vorrichtung eingesetzt sind, wird dadurch eine erste Endposition der Reckstange definiert. Um eine zweite Endposition der Reckstange zu definieren, wird das entsprechende Anschlagstück aus der Vorrichtung entfernt. Dies bedeutet, dass im Stand der Technik nur genau zwei Endpositionen (durch Einbringen bzw. Entfernen des Anschlagstücks) festgelegt werden können.

In dieser Ausführungsform wird vorgeschlagen, dieses Anschlagelement verstellbar bzw. verschiebbar auszuführen, um durch eine Verschiebung dieses Anschlagelements auch eine Veränderung der besagten Endposition vornehmen zu können.

Es wird darauf hingewiesen, dass diese Verstallbarkeit auch unabhängig von den oben beschriebenen Ausführungsformen angewandt werden kann. Die Anmelderin behält sich daher vor, ggfs. auch Schutz zu beanspruchen für eine Vorrichtung zum Umformen von Kunststoffvorformlingen mit einer zwischen zwei Endpositionen verschiebbaren Reckstange sowie einem Anschlagelement, welches eine Endposition der Reckstange definiert, wobei eine Position dieses Anschlagelements, insbesondere in einer Bewegungsrichtung der Reckstange veränderbar ist. Dabei ist es insbesondere nicht nötig, das Anschlagelement aus der Vorrichtung zu entfernen, wenn die Endposition verändert werden soll.

Bevorzugt ist eine elektrische Antriebsvorrichtung zur Verstellung dieses Anschlagelements vorgesehen. Durch diese elektrisch betriebene Verstellung des Anschlagelements ist es möglich, eine entsprechende Anlage mit einer Vielzahl von Umformungsvorrichtungen relativ schnell von einem Behältnistyp auf einen weiteren Behältnistyp umzustellen. Auf diese Weise kann sehr schnell ein Garniturenwechsel vorgenommen werden.

Bei einer weiteren Ausführungsform weist wenigstens eine Behandlungseinheit zum Behandeln der Vorformlinge oder Behältnisse im Rahmen des Umformungsvorgangs ein Greifelement zum Greifen der Vorformlinge auf und dieses Greifelement weist einen elektrischen Antrieb auf. Dabei kann es sich beispielsweise um einen elektrischen Antrieb handeln, der eine Fangklammer für den Vorformling betätigt. Mit Hilfe dieser Klammer kann ein Vorformling der Blasform bzw. der Vorrichtung zugeführt werden. Damit stellt auch diese Fangklammer bzw. Greifeinrichtung eine Behandlungseinheit zum Behandeln der Vorformlinge während des Umformungsvorgangs dar.

Bei einer weiteren vorteilhaften Ausführungsform weist die Vorrichtung wenigstens eine Sensoreinrichtung auf, welche einen für einen Umformungszustand charakteristischen Zustand bzw. Wert erfasst sowie mindest eine Steuerungseinrichtung, welche wenigstens eine Antriebseinrichtung in Reaktion auf diesen Zustand bzw. Wert steuert.

Bei diesem Zustand kann es sich beispielsweise um einen Zustand des Behältnisses handeln, etwa ein fehlerhaftes Behältnis. Es kann sich jedoch auch um einen Besetzungszustand einer Greifklammer mit einem Behältnis handeln, also die Frage, ob eine konkrete Blasform mit einem Vorformling bestückt ist. Es wären jedoch auch andere Betriebs- oder Materialzustände denkbar.

Daneben kann es sich bei dem Zustand auch eine Position einer bestimmten Antriebseinrichtung handeln. So wäre es denkbar, eine Regelung verschiedener elektrischer Antriebseinrichtungen auch in Abhängigkeit von gemessenen Positionen dieser Motoren untereinander vorzunehmen. Daneben ist, wie erwähnt, auch eine Regelung in Abhängigkeit von einer Behältnisbeschaffenheit bzw. - qualität denkbar. Zum Beispiel wäre auch eine optimale Anpassung der Reckgeschwindigkeit aufgrund der erfassten Werte der genannten Reckstange denkbar. Diese erfassten Werte können von einer Inspektionseinheit für die Behälter über eine Auswerteeinrichtung an die Steuereinheit abgegeben, und an den Reckstangenantrieb weitergegeben werden.

Erfindungsgemäss wird gewähleistet, dass die Vorrichtung erkennt, dass kein Vorformling in eine bestimmte Station übergeben wurde und infolge dessen können der oder die Antriebe, welche diese betreffende Station betätigen, die Anweisung erhalten, diese Station nicht zu öffnen, so dass eine Energeieinsparung möglich ist. Dabei wäre es auch möglich, diese Vorgehensweise nicht regelmäßig, sondern zum Beispiel nur beim Fahren jeder n-ten Teilung, beispielsweise jeder zweiten Teilung, einzusetzen.

Daneben könnten beispielsweise Schwingungsmessungen vorgenommen werden, auf deren Grundlage erkannt wird, dass es zu einem "Hochschaukeln" der Maschine kommt. In Reaktion auf ein derartiges "Hochschaukeln" können sich die elektrischen Antriebselemente bzw. Motoren (insbesondere des Reckzylinders) derart einstellen, dass dem Effekt des "Hochschaukelns" entgegengewirkt wird.

Bei einer weiteren vorteilhaften Ausführungsform sind die Bewegungen wenigstens zweier Verschlusselemente miteinander gekoppelt. Dabei ist es insbesondere möglich, die Bewegung des Bodenteils mit der Bewegung der beiden Formteile zu koppeln. Hierbei ist zu berücksichtigen, dass die Formteile und das Bodenteil im Wesentlichen dazu beitragen, den Hohlraum der Blasform auszubilden bzw. die Blasform zu schließen. Damit sind diese Bewegungen von der Beschaffenheit der Behältnisse bzw. deren Gattungen relativ unabhängig, sodass diese Bewegungen miteinander gekoppelt werden können. Weiterhin kann der Antrieb der nunmehr gekoppelten Elemente bevorzugt über einen Elektromotor folgen.

Bei einer weiteren vorteilhaften Ausführungsform erfolgt die Verriegelung der Formteile gegeneinander selbsttätig. Dies bedeutet, dass während eines Schließvorgangs automatisch eine Bewegung der Verriegelungseinrichtung hervorgerufen wird. Gleiches gilt vorzugsweise auch für einen Entriegelungsvorgang mit dem die beiden Formteile gegeneinander entriegelt werden. Hierbei ist zu beachten, dass beispielsweise ein Verriegelungsvorgang mechanisch mit einer Steuerkurve oder auch einem Elektromotor durchgeführt werden kann, umgekehrt jedoch der Entriegelungsvorgang an eine Bewegung der Formteile gekoppelt sein kann.

Bei einer bevorzugten Ausführungsform sind sowohl die Bewegungen der Formteile auch als des Bodenteils gekoppelt als auch der Verriegelungsvorgang der Formteile durch das Schließen der beiden Formteile selbsttätig ausgebildet. Dabei sind bevorzugt diese genannten Funktionen sämtlich durch einen (Elektro) -motor betätigt.

Bei einer weiteren vorteilhaften Ausführungsform weist die Vorrichtung eine Steuerungseinrichtung zum Steuern der Antriebseinrichtungen auf. Auf diese Weise ist es möglich, die einzelnen Antriebseinrichtungen, insbesondere die Elektromotoren in vorgegebener Weise in Beziehung zueinander zu setzen, sodass die Steuerungseinrichtung auch die Funktion einer mechanischen Kopplung übernehmen kann. Dabei ist es insbesondere möglich, dass die Vorrichtung eine dezentrale Steuerung aufweist, d. h. es kann auch eine Steuerungseinrichtung vorgesehen sein, die eine Vielzahl von Blasstationen bzw. die insbesondere elektrischen Antriebe dieser Blasstationen ansteuert.

Damit steuert bevorzugt die Steuerungseinrichtung die Bewegung wenigstens eines Verschlusselementes in Abhängigkeit von einer Bewegung eines weiteren Verschlusselements. So wäre es möglich, dass die Bewegung eines Verschlusselements gezielt begonnen wird, während die Bewegung eines anderen Elementes durchgeführt wird, es wäre jedoch auch möglich, dass sich die Bewegung eines Verschlusselements insbesondere unmittelbar an die Bewegung eines weiteren Verschlusselements anschließt.

Bei einer weiteren vorteilhaften Ausführungsform weist die Vorrichtung wenigstens eine Ventileinrichtung auf, um die Behältnisse mit einem gasförmigen Medium zu beaufschlagen, sowie wenigstens eine Steuereinrichtung zum Steuern dieser Ventileinrichtung.

Bei dem gesamten Blasvorgang werden die zu expandierenden Behältnisse mit einer Vielzahl von unterschiedlichen Drücken beaufschlagt und zu diesem Zweck werden auch unterschiedliche Ventile eingesetzt. Dabei wird teilweise in genauer Weise festgelegt, in welcher Reihenfolge die einzelnen Ventile schalten, um die Behältnisse mit unterschiedlichen Drücke zu versorgen. Diese Druckbeaufschlagungsprozesse können dabei mit einer weiteren Steu-erungseinrichtung gesteuert sein.

Vorzugsweise steuert die genannte Steuerungseinrichtung sowohl die Ventileinrichtungen als auch die Antriebseinrichtungen. Damit ist es möglich, dass die oben erwähnte Steuerung mit einer Steuerung der insbesondere als Hochdruckventile ausgebildete Ventile gekoppelt ist, d. h. die komplette Blasstation weist eine eigene Steuerung für alle elektrischen Antriebe und Ventile auf. Diese Vorgehensweise ist besonders vorteilhaft, da beispielsweise in einem Speicher dieser Steuerungseinrichtung unterschiedliche Prozessparameter hinterlegt werden können, und auf Basis dieser Prozessparameters sowohl die Ventile als auch die Verschlusselemente gesteuert werden. Bei einer Umstellung von einem Produkttyp auf einen anderen können vollständig neue Parametersätze geladen werden und auf diese Weise eine entsprechende Vorrichtung innerhalb kürzester Zeit umgestellt werden.

Bei einer weiteren vorteilhaften Ausführungsform weist die Vorrichtung eine Vielzahl von an einem Träger geführten Blasstationen mit Blasformen auf. Vorteilhaft werden dabei die Blasstationen wenigstens abschnittsweise entlang einer Kreisbahn geführt. In diesem Falle kann es sich bei dem Träger um ein Karussell handeln, auf dem bevorzugt auch die einzelnen Verschlusselemente und auch die Steuerungseinrichtungen angeordnet sind.

Bei einer weiteren vorteilhaften Ausführungsform weist die Vorrichtung wenigstens eine Reckstange zum Recken der Kunststoffvorformlinge auf. Dabei wird vorzugsweise auch diese Reckstange durch einen Elektromotor angetrieben. Auch die Steuerung dieses Elektromotors kann in die oben erwähnte Steuereinrichtung integriert werden.

Für die genannten Verschlusselemente ist es dabei möglich, dass diese von einem Elektromotor direkt bzw. unmittelbar angetrieben werden, es wäre jedoch auch möglich, dass der Antrieb durch Zwischenschalten insbesondere von Getriebeelementen abläuft.

Die vorliegende Erfindung ist weiterhin auf ein Verfahren zum Umformen von Kunststoffvorformlingen zu Kunststoffbehältnissen gerichtet, wobei die Kunststoffvorformlinge innerhalb einer Blasform angeordnet werden und eine Vielzahl von Verschlusselementen zusammenwirkt um die Blasform von einem geöffneten Zustand in eine geschlossenen Zustand, in dem die Blasform einen Hohlraum ausbildet, innerhalb dessen die Kunststoffvorformlinge zu Kunststoffbehältnissen expandiert werden, zu überführen. Dabei weisen die Verschlusselemente wenigstens ein erstes Formteil und ein zweites Formteil auf, wobei das erste Formteil und das zweite Formteil zwischen der geschlossenen Stellung und der geöffneten Stellung bezüglich einander bewegt werden und wobei die Verschlusselemente weiterhin eine Blasdüseneinrichtung aufweisen, welche gegenüber den Formteilen bewegt wird, um den Hohlraum in einer Richtung abzuschließen und wobei wenigstens eine erste Antriebseinrichtung die Formteile bezüglich einander bewegt und eine zweite Antriebseinrichtung die Blasdüse gegenüber den Formteilen bewegt. Erfindungsgemäß wird wenigstens eines der genannten Verschlusselemente durch eine elektrische Antriebseinrichtung und insbesondere einen Elektromotor bewegt.

Vorzugsweise werden wenigstens zwei Verschlusselemente durch elektrische Antriebseinrichtungen und insbesondere Elektromotoren bewegt.

### Weitere Vorteile und Ausführungsformen ergeben sich aus den beigefügten Zeichnungen:

Darin zeigen:
- Fig. 1: eine Vorrichtung zum Umformen von Kunststoffvorformlingen nach dem Stand der Technik;
- Fig. 2: eine erfindungsgemäße Vorrichtung in einer ersten Ausführungsform;
- Fig. 3: eine erfindungsgemäße Vorrichtung in einer zweiten Ausführungsform;
- Fig. 4a: eine Vorrichtung mit Steuerung;
- Fig. 4b: eine weitere Ausführungsform einer erfindungsgemäßen Vorrichtung;
- Fig. 5: ein Blockdiagramm einer Steuerung für eine erfindungsgemäße Vorrichtung;
- Fig. 6: ein weiteres Blockdiagramm zur Veranschaulichung einer Steuerung; und
- Fig. 7a - 7d: vier Darstellungen eines Druckmechanismus.

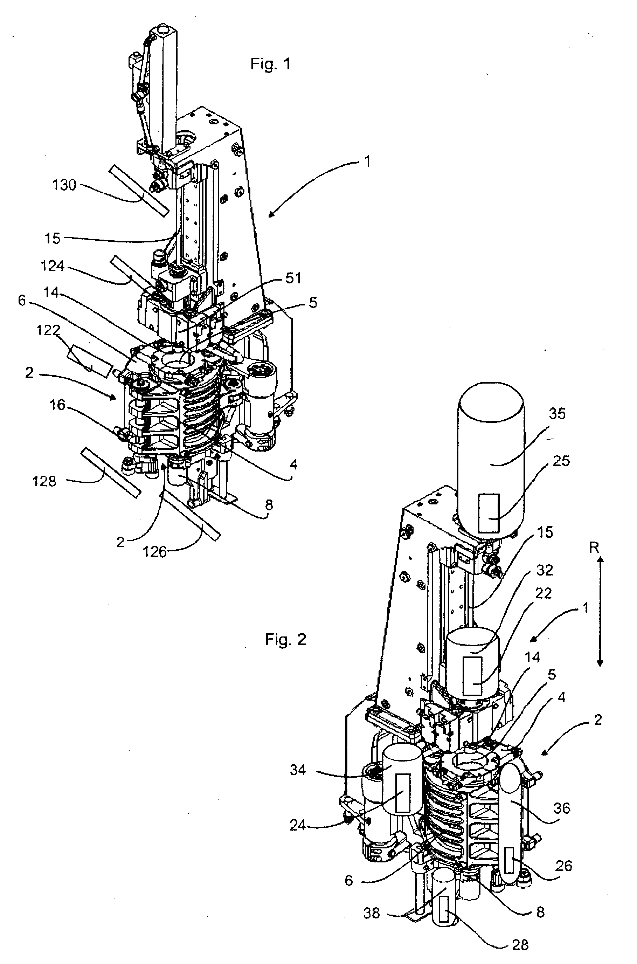

Fig. 1 zeigt eine Vorrichtung 100 zum Umformen von (nicht gezeigten) Behältnissen nach dem Stand der Technik. Diese Vorrichtung weist dabei eine Blasform 2 auf. Diese Blasform 2 setzt sich hier zusammen aus einem ersten Formteil 4 und einem zweiten Formteil 6, die gegeneinander um eine (verdeckte) Schwenkachse verschwenkbar sind. In dem in Fig. 1 gezeigten zusammengeklappten Zustand wird durch die beiden Formteile 4 und 6 ein Hohlraum 5 gebildet, innerhalb dessen die Vorformlinge mittels Druckzuführung zu Behältnissen expandiert werden können.

Bezugszeichen 16 bezieht sich auf eine Verriegelungsstange, welche zur Verriegelung der beiden Formteile 4 und 6 gegeneinander dient. Weiterhin ist eine Blasdüse 14 gezeigt, die während des Blasvorgangs auf eine Mündung der Behältnisse aufgesetzt wird, um diese mit Druckluft zu beaufschlagen. Daneben kann auch eine Reckstange 15 vorgesehen sein, welche während des eigentlichen Umformungsvorgangs nach unten abgesenkt wird und damit den (nicht gezeigten) Vorformling in dessen Längsrichtung dehnt. Weiterhin weist die Vorrichtung auch ein Bodenteil 8 auf, welches beim Schließen der Blasform 1 von unten an die beiden Formteile 4, 6 herangeführt wird. Im Stand der Technik werden unterschiedliche Führungskurven 122, 126, 128, 124 und 130 eingesetzt um die Bewegung der einzelnen Verschlusselemente 4, 6, 8, 14 und 15 zu steuern. Diese Führungskurven sind jedoch nur schematisch dargestellt. Das Bezugszeichen 51 bezieht sich auf einen Ventilblock in dem eine Vielzahl von Ventilen angeordnet ist, um die Druckluftzuführung an die Vorformlinge zu steuern. Das Bezugszeichen R kennzeichnet eine Bewegungsrichtung der Reckstange.

Fig. 2 zeigt eine erfindungsgemäße Vorrichtung in einer ersten Ausführungsform. Man erkennt, dass hier eine Vielzahl von nur schematisch dargestellten Antriebseinrichtungen 22, 24, 26, 28 und 25 vorgesehen sind, welche dazu dienen, um die auch in Fig. 1 veranschaulichten Bewegungsvorgänge durchzuführen. So dient eine Antriebseinrichtung 22 als Antrieb, um die Blasdüse 14 nach unten auf die Blasform 1 abzusenken. Ein Antrieb 26 dient dazu, um die Stange 16, welche in Fig. 2 verdeckt ist, zu drehen und damit eine Verriegelung der beiden Formteile 4 und 6 zu bewirken. Ein Antrieb 28 dient zum Heben bzw. Senken des Bodenteils 8. Schließlich dient eine weitere Antriebseinrichtung 24 zum Öffnen und Schließen des Formträgers bzw. zum Verschwenken der beiden Formteile 4 und 6. Bei der in Fig. 2 gezeigten Ausführungsform sind sämtliche der genannten Antriebseinrichtungen jeweils durch Motoren insbesondere Elektromotoren 36, 34, 38, 32 und 35 angetrieben. Auf diese Weise kann bei der in Fig. 2 gezeigten Ausführungsform vollständig auf Führungskurven verzichtet werden und der gesamte Antriebe läuft auf diese Weise elektromotorisch gesteuert.

Es wird jedoch darauf hingewiesen, dass es auch möglich wäre, einzelne der in Fig. 1 gezeigten Führungskurven zu belassen und nur teilweise elektromotorische Antriebe vorzugsehen.

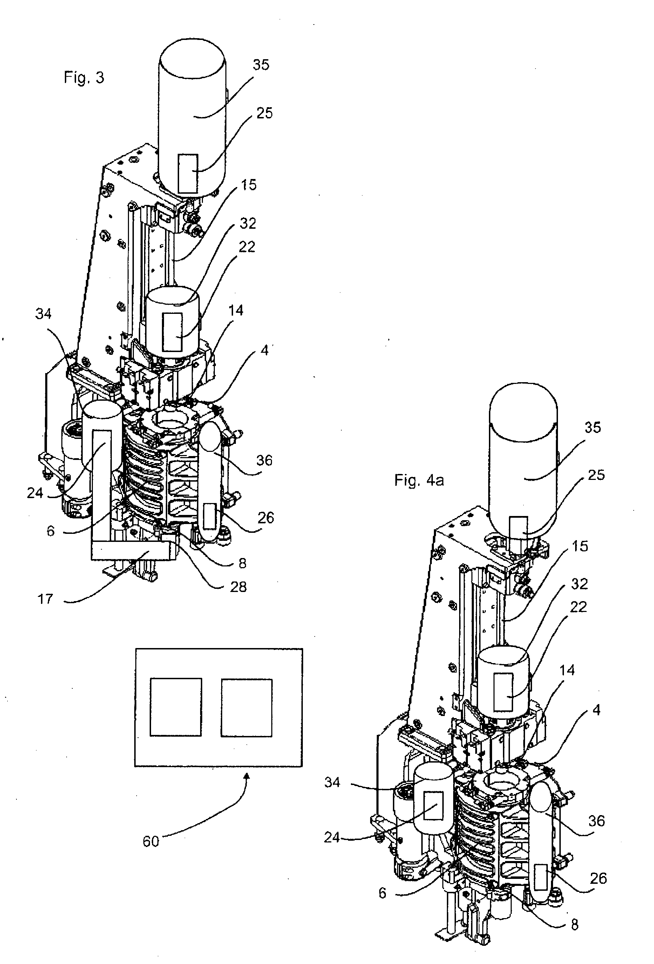

Fig. 3 zeigt eine weitere Ausführungsform einer erfindungsgemäßen Vorrichtung. In diesem Falle ist der in Fig. 2 gezeigte Elektromotor 38 nicht vorhanden, sondern die Bewegung des Bodenteils 8 ist an die Öffnungs- bzw.
Schließbewegung der beiden Formteile 4 und 6 gekoppelt. Zu diesem Zweck ist eine Koppeleinrichtung 17 vorgesehen, welche die Antriebseinrichtung 24 mit der Antriebseinrichtung 28 koppelt. Es wäre jedoch hierbei auch möglich, dass die Kopplungseinrichtung 17 selbst direkt als Antriebseinrichtung für das Bodenteil 8 d. h. zum Heben und Senken des Bodenteils 8 dient.

Daneben wäre es auch möglich, dass die Antriebseinrichtung 36 bzw. der Elektromotor 26 lediglich für das Entriegeln der beiden Formteile zuständig ist und das Verriegeln an eine Bewegung der Formteile gekoppelt ist. Umgekehrt könnte auch das Verriegeln durch die Antriebseinrichtung 26 bewirkt werden und das Entriegeln an eine Bewegung der Formteile 4, 6 gekoppelt sein. Es wären jedoch auch andere Kopplungsmechanismen denkbar, beispielsweise zwischen der in Fig. 2 gezeigten Antriebseinrichtung 26 und der Antriebseinrichtung 28. Allgemein ist grundsätzlich eine beliebige Kopplung der einzelnen Antriebseinrichtungen 22, 24, 26, 28 und 25 denkbar, je nach der jeweiligen Anwendung.

Fig. 4a zeigt eine weitere Ausführungsform einer erfindungsgemäßen Vorrichtung. In diesem Falle ist auch eine Steuerungseinrichtung 60 vorgesehen, welche die einzelnen Motoren 32, 34, 36, 38 und 35 steuert. Dabei kann, wie oben erwähnt, eine derartige Steuerungseinrichtung auf bestimmte Prozessdaten zugreifen und damit die einzelnen Elektromotoren auch in Abstimmung zueinander steuern. Bevorzugt handelt es sich bei einem oder mehreren der genannten Elektromotoren 32, 34, 35, 36, 38 um Servomotoren.

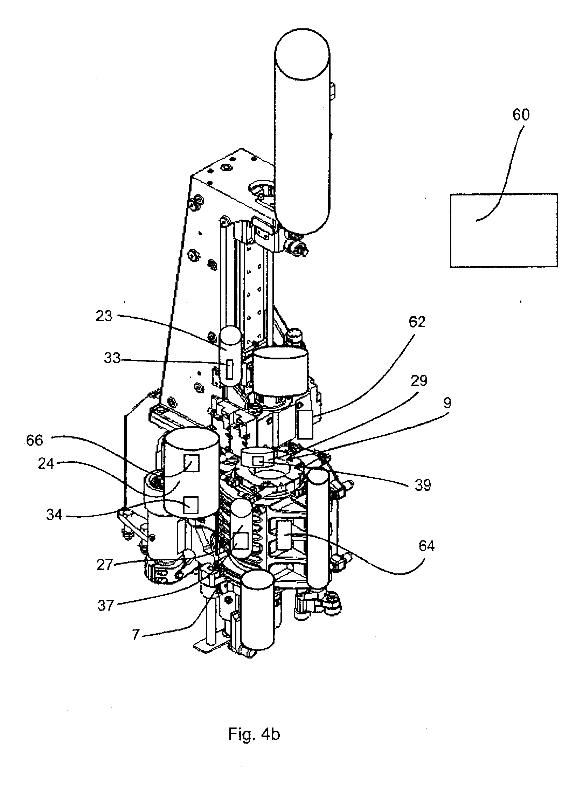

FIg. 4b zeigt eine weitere Ausführungsform einer erfindungsgemäßen Vorrichtung. Aus Gründen der Übersichtlichkeit wurden hier einige der Bezugszeichen weggelassen. Bei der In Fig. 4b gezeigten Ausführungsform ist eine Antriebseinrichtung 29 vorgesehen, welche eine Greifklammer 9 betätigt, die die Vorformlinge der Blasform zuführt. Diese Antriebseinrichtung 29 weist dabei einen Elektromotor 39 auf. Das Bezugszeichen 23 kennzeichnet eine Antriebseinrichtung zum Verstellen eines Reckanschlags, genauer eines (nicht gezeigten) Anschlagelements, welches eine untere Position der Reckstange bestimmt. Auch diese Antriebseinrichtung 23 weist einen Elektromotor 33 auf. Es wäre jedoch auch möglich, diesen Reckanschlag in anderer Weise, beispielsweise manuell, etwa mittels eines Hebels zu verstellen.

Das Bezugszeichen 27 kennzeichnet eine Antriebseinrichtung zum Zusammenpressen der Blasform im Inneren der Formteile 4,6 Diese Antriebseinrichtung weist hier einen Elektromagneten 37 auf, es wäre jedoch auch die Verwendung eines Elektromotors denkbar.

Daneben sind Sensoreinrichtungen 62, 64, 66 vorhanden, welche Zustände der Vorrichtung erfassen. Genauer gesagt handelt es sich bei der Sensoreinrichtung 62 um einen Sensor, der beispielsweise einen Besetzungszustand einer Greifklammer mit einem Behältnis erfassen kann oder aber einen Sensor, der eine Öffnungs bzw. Schließstellung der Greifklammer erfasst.

Das Bezugszeichen 64 kennzeichnet eine Sensoreinrichtung, welche eine Zustand der Behältnisse erfasst, etwa ein optischer Sensor, der die Behältnisse auf Beschädigungen untersucht. Es könnte jedoch auf ein Sensor vorgesehen sein, der beispielsweise einen Druck im Inneren der Behältnisse während des Umformungsvorgangs ermittelt.

Eine weitere Sensoreinrichtung 66 erfasst hier eine Stellung des Motors 34 der Antriebseinrichtug 24. Entsprechende Sensoren können dabei auch in den anderen Antriebseinrichtungen vorgesehen sein. Diese Sensoren geben ihre Messdaten an die Steuereinrichtung 60 weiter. Auf Grundlage dieser Messdaten können die einzelnen Antriebe 22 - 29 bzw. deren Motoren gesteuert werden. Auf diese Weise wird ein Regelmechanismus vorgeschlagen, wobei aufgrund von den gemessenen Werten die einzelnen Motoren 32 - 39 bzw. Antriebsmittel unterschiedlich reagieren.

Bei den Regelungsgrößen für diesen Regelmechanismus kann es sich u.a. um eine Schwingungsamplitude, eine Qualität der Vorformlinge, das Vorhandensein von Vorformlingen in der Blasform, eine Momentenübertragung (zur Feststellung eines Formträgerbruchs) oder dergleichen handeln. Mögliche Stellgrößen für den Regelmechanismus sind beispielsweise die Zeitpunkte der Motorsteuerung oder Elektromagnetensteuerung oder auch die Drehmomente oder Geschwindigkeiten der Elektromotoren.

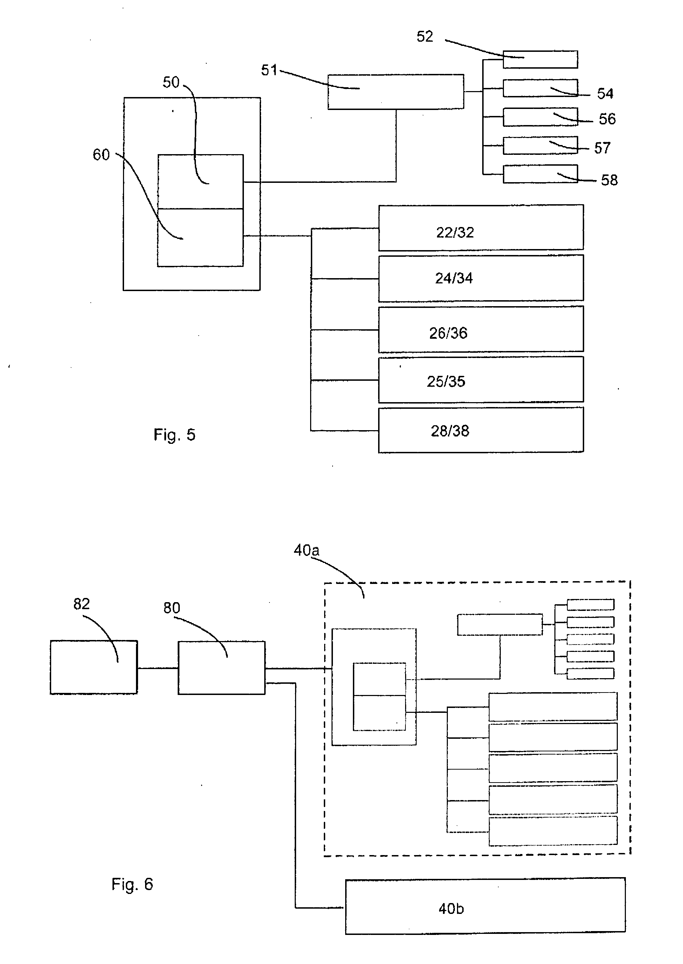

Fig. 5 zeigt ein Blockschaltbild einer erfindungsgemäßen Vorrichtung. Dabei ist hier wiederum die Steuerungseinrichtung 60 vorgesehen, welche die einzelnen Antriebe 22, 24, 26, 25, 28 bzw. deren Elektromotoren 32, 34, 36, 38, 35 steuert. Daneben ist eine weitere Steuerungseinrichtung 50 vorgesehen, welche über einen Ventilblock 51 unterschiedliche Ventile insbesondere Hochdruckventile 52, 54, 56, 57, 58 steuert. Die beiden Steuerungseinrichtungen 50 und 60 kommunizieren miteinander, damit auf diese Weise der gesamte Blasprozess einschließlich aller Bewegungen der Blasform einheitlich gesteuert werden kann. Insbesondere ist es so auch möglich, die Steuerung der Ventil 52 - 58 in die Steuerung der einzelnen Elektromotoren einzubinden und beispielsweise eine Zuführung von Luft über die Ventile erst zuzulassen, nachdem die beiden Formteile 4, 6 verschlossen und verriegelt sind.

Fig. 6 zeigt eine weitere Darstellung zur Veranschaulichung der Erfindung. Dabei bezieht sich das gestrichelte Rechteck 40a auf den in Fig. 5 dargestellten Teil der Steuerung und damit auf die Steuerung einer einzelnen Blasstation. Eine Anlage zum Umformen von Behältnissen weist jedoch üblicherweise eine Vielzahl solcher Blasstationen auf, welche beispielsweise an einem Transportkarussell angeordnet sein können. Das Bezugszeichen 40b bezieht sich in diesem Falle auf eine weitere Blasstation.

Das Bezugszeichen 80 kennzeichnet eine zentrale Steuerung, welche die einzelnen Blasstationen 40a, 40b steuert. Das Bezugszeichen 82 bezieht sich auf die Blasmaschine in ihrer Gesamtheit, die wiederum in eine übergeordnete Anlage eingebunden sein kann, wobei die übergeordnete Anlage zusätzlich auch Heizeinrichtungen zum Erwärmen der Vorformlinge, nachgeschaltete Abfüllmaschinen und dergleichen aufweisen kann.

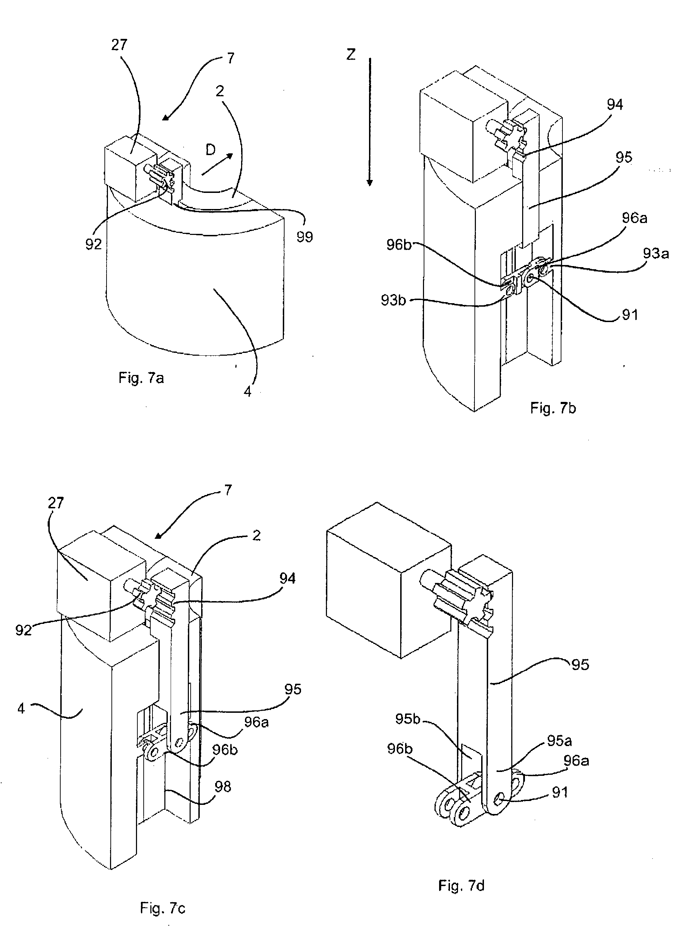

Die Fig. 7a - 7d zeigen eine Ausführungsform, bei der die Blasform 2, welche insbesondere ebenfalls zweiteilig ausgebildet ist, durch einen in seiner Gesamtheit mit 7 bezeichneten Druckmechanismus belastet wird. In Fig. 7a ist dabei ein Formteil 4 dargestellt, in dessen Inneren die Blasform 2 angeordnet ist. Das entsprechende zweite Formteil und die zweite Blasformhälfte der Blasform 2 sind nicht dargestellt.

Bei der Herstellung der Behältnisse ist es vorteilhaft, wenn die Blasform 2 bei bereits miteinander verriegelten Formteilen 4, 6 noch zusammengepresst wird, damit insbesondere an den Übergängen zwischen den beiden Blasformhälften möglichst geringe Unebenheiten auftreten, damit das fertig gestellte Behältnis in diesen Bereichen möglichst glatt ausgebildet ist. Aus diesem Grund ist es vorteilhaft, die Blasform im Inneren der Formteile mechanisch zu belasten, genauer, die in Fig. 7a gezeigte Blasformhälfte in einer Druckrichtung D auf die andere (nicht gezeigte) Blasformhälfte zu zu bewegen.

Zu diesem Zweck ist der in Fig. 7a gezeigte Druckmechanismus 7 vorgesehen. Dieser Druckmechanismus ist dabei vorteilhaft zwischen dem Formteil 4 und der Blasform 2 angeordnet, und besonders bevorzugt in Umfangsrichtung des Formteils 4 im Wesentlichen in dessen Mitte.

Es wird darauf hingewiesen, dass der in den Fig 7a - 7d gezeigte Druckmechanismus 7 auch unabhängig von der in dieser Anmeldung dargestellten Erfindung zum Einsatz kommen kann. Eine entsprechende Umformungseinheit weist daher ein erstes Formteil 4 und ein zweites Formteil 6 auf, wobei das erste Formteil 4 und das zweite Formteil 6 zwischen der geschlossenen Stellung und der geöffneten Stellung bezüglich einander bewegbar sind. Weiterhin ist in einer geschlossenen Stellung zwischen diesem ersten Formteil 4 und dem zweiten Formteil 6 eine Blasform angeordnet und es ist ein Druckmechanismus vorgesehen, der bei geschlossenen Formteilen 4, 6 die Blasform gegenüber den Formteilen 4 ,6 mit einem Druck beaufschlagt.

Dabei handelt es sich bei diesem Druckmechanismus um einen mechanisch wirkenden Druckmechanismus, der wenigstens ein Hebelelement 96 aufweist, welches sowohl mit dem Formteil 4 als auch mit der Blasform 2 zusammenwirkt, um die Blasform mit dem Druck zu belasten.

Im Stand der Technik werden zum Zwecke dieser Druckbeaufschlagung üblicherweise Druckkissen eingesetzt, die zwischen dem Formteil 4 bzw. dem Formträger und der Blasform 2 angeordnet sind. Diese Druckkissen bewirken, dass die Blasform im Inneren der beiden Formteile nach dem Schließen der Formteile 4 , 6 zusammengedrückt wird.

Im Rahmen dieser auch als eigenständige Erfindung beanspruchbaren Ausführungsform wird hingegen ein Hebelmechanismus vorgeschlagen, der sowohl mit dem Formteil als auch mit der Blasform zusammenwirkt, um die Blasform 2, genauer die Blasformhälften im Inneren der Formteile 4, 6 zusammenzudrücken.

Bevorzugt weist der Druckmechanismus eine Übertragungsstange 95 auf, die eine Antriebseinrichtung 27 mit dem Hebelelement 96 koppelt. Bevorzugt ist dabei allgemein eine (insbesondere mechanisch wirkende) Antriebseinrichtung 27 zum Ausüben von Drücken außerhalb der Formteile 4, 6 angeordnet. Bei einer weiteren vorteilhaften Ausführungsform ist die Übertragungsstange 95 in einer Längsrichtung der zu expandierenden Behältnisse bzw. in derjenigen Richtung, in der auch die Reckstange bewegbar ist, bewegbar. Bei einer weiteren vorteilhaften Ausführungsform ist zwischen einer Innenwandung des Formteils 4 und der Blasform eine Ausnehmung zur Aufnahme der Übertragungsstange 95 ausgebildet. Damit ist vorteilhaft der gesamte Druckmechanismus in dem Formteil 4 ausgebildet. Damit ist bei einer Entnahme der Blasform von dem Formteil im Wesentlichen keine Auftrennung des Druckmechanismus nötig.

Vorzugsweise weist das Hebelelement 96 wenigstens ein gegenüber der Übertragungsstange 95 schwenkbares Hebelglied 96a auf, wobei dieses Hebelglied entweder mit dem Formteil 4 oder mit der Blasform 2 gekoppelt ist. Vorzugsweise weist das Hebelelement zwei gegenüber der Bewegungsstange schwenkbare Hebelglieder 96a, 96b auf, wobei eines dieser Hebelglieder mit dem Formteil 4 und das andere Hebelglied 96a mit der Blasform 2 gekoppelt ist. Durch eine geeignete Schwenkung der Hebelglieder werden das Formteil 4 und die Blasform 2 auseinander gepresst.

Dabei sind bevorzugt die Hebelglieder 96a, 96b in einer Ebene schwenkbar, welche durch eine radiale Richtung der Blasform 2 und die besagte Längsrichtung der Behältnisse gebildet wird. Bei einer weiteren vorteilhaften Ausführungsform sind auch die beiden Hebelglieder 96a, 96b gegeneinander schwenkbar. Vorteilhaft sind auch die beiden Hebelglieder 96a, 96b jeweils gegenüber dem Formteil bzw. der Blasform schwenkbar. So ist es möglich, dass ein Hebelglied 96b an dem Formteil 4 angelenkt ist und das andere Hebelglied 96a an der Blasform 2. Durch eine Bewegung der Übertragungsstange 95 werden die beiden Anlenkungsstellen auseinandergespreizt und auf diese Weise die Blasform 2 von dem Formteil weggedrückt.

Bevorzugt wird dabei die Übertragungsstange 95 nur gegenüber dem Formträger bzw. dem Formteil 4 geführt. Durch eine Bewegung der beiden Hebelglieder 96a, 96b, ist es möglich, dass der Weg der Formteile 4,6 gegenüber der Blasform 2 zum Pressen der Blasform 2 mit hoher Kraft überwunden werden kann. Dieser Weg liegt dabei beispielsweise in einem Bereich zwischen 0,1mm und 0,9mm, bevorzugt zwischen 0,2mm und 0,8mm und besonders bevorzugt bei etwa 0,3mm. Die Hebelglieder 96a, 96b sind hierbei bevorzugt als Kniehebelmechanismus ausgeführt, da nur ein sehr kleiner Verstellweg nötig ist, um große Kräfte zu übertragen.

Zum Bewegen der Übertragungsstange 95 wird hier ein elektrischer Antrieb 27 eingesetzt. Es wäre jedoch auch möglich, dass zum Bewegen der Übertragungstange eine Kurve verwendet wird. Ein elektrischer Antrieb bietet jedoch den Vorteil, dass ein Überdrücken der Hebel und Formen leichter verhindert werden kann.

Es wären aber auch andere Arten von Getrieben oder Hebel - Verhältnissen möglich, zum Beispiel eine exzentrische Lagerung des langen Hebels auf der Servowelle. Man könnte auch auf das Drehlager bei dem kleinen Hebelglied 96a am Formträger verzichten und anstatt dessen eine Lineargleitlagerführung anbringen, an der der Hebel an der linken Seite abrutschen kann, bis er sich auch zwischen Formträger 4 und Formträgerschale verklemmt (annähernd Kniehebel)

Die Bezugszeichen 93a und 93b beziehen sich auf Anlenkungsvorsprünge, die jeweils an dem Formteil 4 und der Blasform 2 ausgebildet sind, und an denen die beiden Hebelglieder 96a, 96b (vorzugsweise über nicht gezeigte Schwenkwellen) angelenkt sind. Das Bezugszeichen 91 kennzeichnet eine Anlenkungsstelle, an der die beiden Hebelglieder 96a, 96b gegenüber der Übetragungsstange 95 angelenkt sind.

Vorzugsweise ist ein Anschlagmittel 99 vorgesehen, welches bewirkt, dass die Übertragungsstange 95 nur bis zu einer gewissen Stellung in das Formteil 4 einschiebbar ist. Weiterhin wäre es auch möglich, einen Bewegungsweg der Übertragungsstange, welche hier als Zahnstange 95 mit einer Verzahnung 94 ausgebildet ist, durch die Verzahnung zu begrenzen. Diese Verzahnung 94 wirkt mit eine Antriebsrad 92 zusammen.

Bei einer weiteren Ausführungsform sind neben dem Hebelelement 96a, 96b in der Richtung Z weitere Hebelelement 96a, 96b (nicht gezeigt) hintereinander vorgesehen, damit eine Belasung auf die Blasform 2 in gleichmäßigerer Weise ausgeübt werden kann. Vorteilhaft sind wenigstens 2, besonders bevorzugt wenigstens drei der gezeigten Hebelelemente 96, 96b jeweils an der Übertragungsstange 95 angeordnet. Das Bezugszeichen 98 (Fig. 7c) bezieht sich auf eine in dem Formteil 4 ausgebildete Ausnehmung, innerhalb derer das Hebelelement 96a, 96b angeordnet ist. Die Übertragungsstange 95 weist zwei Vorsprünge 95a, 95b auf, zwischen denen die Hebelelemente 96a, 96b schwenkbar angeordnet werden können. Die Antriebseinrichtung 27 ist bevorzugt fest auf dem Formteil 4 angeordnet.

Es wäre möglich, dass sich auf dem zweiten Formteil 6 ebenfalls ein entsprechender Druckmechanismus 7 befindet. Bevorzugt ist es jedoch ausreichend, jeweils nur einen derartigen Druckmechanismus 7 an einem der beiden Formteile vorzusehen. Die beiden Helelglieder 96a, 96b sind bevorzugt zur Kraftübertragung starr ausgebildet.

In einer weiteren vorteilhaften Ausführungsform ist die Übertragungsstange 95 an einer Endseite überwiegend keilförmig ausgebildet (nicht gezeigt). Ebenso sind am Formteil 4 und der Blasform 2 keilförmige Flächen als Gegenkontur zur Übertragungsstangenspitze ausgebildet. Eine Bewegung der keilförmigen Flächen zueinander verursacht eine Verspannung zwischen Blasform 2 und Formteil 4. Die Blasform 2 verspannt sich somit gegen das Formteil 4.

In einer weiteren vorteilhaften Ausführungsform ist die Servowelle parallel zu der Achse der Übertragungsstange 95 angeordnet. An der Übertragungsstange ist ein (nicht gezeigtes) Bewegungsgewinde angeordnet, welches im Eingriff mit einem Bewegungsgewinde steht, dass an der Servowelle angeordnet ist. Somit kann eine Kraftübertragung ohne Zwischenschaltung eines Getriebes erfolgen.

Es ist bei diesen Ausführungsformen verständlich, dass der Mechanismus zum Pressen der Blasformhälften 2 gegeneinander auch zwischen dem Formträger und einer Schale angebracht werden kann, in der die eigentliche Blasform lagert.

## Patentansprüche

1. Vorrichtung (1) zum Umformen von Kunststoffvorformlingen zu Kunststoffbehältnissen, mit
wenigstens einer Blasform (2),
einer Vielzahl von Verschlusselementen (4, 6, 8, 14, 16), die miteinander zusammenwirken, um die Blasform zwischen einem geöffneten Zustand und einem geschlossenen Zustand, in dem die Blasform einen Hohlraum (12) ausbildet, innerhalb dessen die Kunststoffvorformlinge zu Kunststoffbehältnissen expandierbar sind, zu überführen, wobei die Verschlusselemente wenigstens ein erstes Formteil (4) und ein zweites Formteil (6) umfassen, wobei das erste Formteil (4) und das zweite Formteil (6) zwischen dem geschlossenen Zustand und dem geöffneten Zustand bezüglich einander bewegbar sind, und wobei die Verschlusselemente (4, 6, 8, 14, 16) weiterhin eine Blasdüseneinrichtung (14) umfassen, welche gegenüber den Formteilen (4, 6) bewegbar ist, und welche den Hohlraum (12) in dem geschlossenen Zustand in einer Richtung abschließt,
wenigstens einer ersten Antriebseinrichtung (24) zum Bewegen der Formteile (4, 6) bezüglich einander,
einer zweiten Antriebseinrichtung (22) zum Bewegen der Blasdüseneinrichtung (14) gegenüber den Formteilen (4, 6),und
bevorzugt wenigstens einer Behandlungseinheit (9, 15) zum Behandeln der Vorformlinge während des Umformungsvorgangs,
wobei wenigstens eine Antriebseinrichtung (22, 24, 26, 28) zum Bewegen wenigstens eines der Verschlusselemente (4, 6, 8, 14, 16) zum Überführen der Blasform (1) zwischen dem geschlossenen Zustand und dem geöffneten Zustand oder wenigstens eine Antriebseinrichtung (25, 29) zum Betreiben einer Behandlungseinheit (9, 15) zum Behandeln der Vorformlinge während des Umformungsvorgangs eine elektrische Antriebseinrichtung ( 32, 34, 35, 36, 38, 39) mit einer Steuerungseinrichtung (60) zum Steuern der Antriebseinrichtungen ist,
**dadurch gekennzeichnet, dass**
die Vorrichtung (1) wenigstens eine Sensoreinrichtung (62, 64, 66) aufweist, welche einen für einen Umformungszustand charakteristischen Zustand erfasst, wobei die Steuerungseinrichtung (60) derart ausgestaltet ist, dass sie wenigstens eine Antriebseinrichtung in Reaktion auf diesen Zustand steuert und die Sensoreinrichtung zur Erfassung ausgestaltet ist, ob in die Blasform (2) ein Vorformling übergeben wurde, wobei die Steuereinrichtung (60) derart ausgestaltet ist, dass sie den Antriebseinrichtungen (22, 24, 28) die Anweisung gibt, die Blasform (2) nicht von dem geschlossenen Zustand in den geöffneten Zustand zu überführen, wenn in die Blasform (2) kein Vorformling übergeben wurde.

2. Vorrichtung (1) nach Anspruch 1,
**dadurch gekennzeichnet, dass**
diese ein Bodenteil (8) umfasst, welches gegenüber den Formteilen (4, 6) bewegbar ist, um den Hohlraum in einer Richtung abzuschließen sowie wenigstens eine dritte Antriebseinrichtung (26) zum Bewegen dieses Bodenteils (8) aufweist und/oder einen elektrisch betriebenen Druckmechanismus (7) zum mechanischen Belasten der Blasform (2).

3. Vorrichtung (1) nach wenigstens einem der vorangegangenen Ansprüche,
**dadurch gekennzeichnet, dass**
die Verschlusselemente eine Verriegelungseinrichtung (16) umfassen, welche die Formteile (4, 6) in einem geschlossenen Zustand der Blasform (2) miteinander verriegelt, sowie bevorzugt wenigstens eine vierte Antriebseinrichtung (26) zum Bewegen dieser Verriegelungseinrichtung.

4. Vorrichtung (1) nach wenigstens einem der vorangegangenen Ansprüche,
**dadurch gekennzeichnet, dass**
wenigstens eine Behandlungseinheit zum Behandeln der Vorformlinge im Rahmen des Umformungsvorgangs eine Reckstange (15) zum Recken der Kunststoffvorformlinge aufweist, wobei diese Reckstange in einer vorgegebenen Bewegungsrichtung bewegbar ist und ein Anschlagelement vorgesehen ist, welches eine Endstellung dieser Reckstange (15) in der Bewegungsrichtung (R) vorgibt, wobei dieses Anschlagelement in der Bewegungsrichtung der Reckstange verstellbar ist und wobei eine elektrische Antriebsvorrichtung (23) zur Verstellung dieses Anschlagelements vorgesehen ist.

5. Vorrichtung (1) nach wenigstens einem der vorangegangenen Ansprüche,
**dadurch gekennzeichnet, dass**
wenigstens eine Behandlungseinheit zum Behandeln der Vorformlinge im Rahmen des Umformungsvorgangs ein Greifelement zum Greifen der Vorformlinge ist und dieses Greifelement einen elektrischen Antrieb aufweist.

6. Vorrichtung (1) nach wenigstens einem der vorangegangenen Ansprüche,
**dadurch gekennzeichnet, dass**
die Steuereinrichtung (60) derart ausgestaltet ist, dass sie den Antriebseinrichtungen (22, 24, 28) die Anweisung nur beim Fahren jeder 2-Teilung gibt.

7. Vorrichtung (1) nach wenigstens einem der vorangegangenen Ansprüche,
**dadurch gekennzeichnet, dass**
die Steuereinrichtung (60) derart ausgestaltet ist, dass sie den Antriebseinrichtungen (22, 24, 28) die Anweisung nur beim Fahren jeder n-Teilung gibt.

8. Vorrichtung (1) nach wenigstens einem der vorangegangenen Ansprüche,
**dadurch gekennzeichnet, dass**
die Sensoreinrichtung einen Schwingungssensor aufweist, welcher ein Hochschaukeln der Vorrichtung (1) erfasst, wobei die Steuerungseinrichtung (60) derart ausgestaltet ist, dass sie wenigstens eine Antriebseinrichtung in Reaktion auf diesen Zustand steuert, um dem Effekt des Hochschaukelns entgegen zu wirken.

9. Vorrichtung (1) nach wenigstens einem der vorangegangenen Ansprüche,
**dadurch gekennzeichnet, dass**
die Steuerungseinrichtung (60) die Bewegungen wenigstens eine Verschlusselements (4, 6, 8, 14, 16) in Abhängigkeit von der Bewegung eines weiteren Verschlusselements (4, 6, 8, 14, 16) steuert.

10. Vorrichtung (1) nach wenigstens einem der vorangegangenen Ansprüche,
**dadurch gekennzeichnet, dass**
die Vorrichtung (1) wenigstens eine Ventileinrichtung (52, 54, 56, 57, 58) aufweist, um die Behältnisse mit einem gasförmigen Medium zu beaufschlagen, sowie wenigstens eine weitere Steuerungseinrichtung ( 50) zum Steuern dieser Ventileinrichtung.

11. Vorrichtung (1) nach Anspruch 10,
**dadurch gekennzeichnet, dass**
die Steuerungseinrichtung (60) sowohl die Ventileinrichtungen (52, 54, 56, 57, 58) als auch die Antriebseinrichtungen steuert.

12. Vorrichtung (1) nach wenigstens einem der vorangegangenen Ansprüche
**dadurch gekennzeichnet, dass**
die Vorrichtung eine Vielzahl von an einem Träger geführten Blasstationen mit Blasformen (2) aufweist.

13. Verfahren zum Umformen von Kunststoffvorformlingen zu Kunststoffbehältnissen, wobei die Kunststoffvorformlinge innerhalb einer Blasform (2) angeordnet werden und eine Vielzahl von Verschlusselementen (4, 6, 8, 14, 16) zusammenwirkt, um die Blasform von einem geöffneten Zustand in einen geschlossenen Zustand, in dem die Blasform einen Hohlraum (12) ausbildet, innerhalb dessen die Kunststoffvorformlinge zu Kunststoffbehältnissen expandierbar sind, zu überführen, wobei die Verschlusselemente wenigstens ein erstes Formteil (4) und ein zweites Formteil (6) umfassen, wobei das erste Formteil (4) und das zweite Formteil (6) zwischen dem geschlossenen Zustand und dem geöffneten Zustand bezüglich einander bewegt werden, und wobei die Verschlusselemente (4, 6, 8, 14, 16) weiterhin eine Blasdüseneinrichtung (14) umfassen, welche gegenüber den Formteilen (4, 6) bewegt wird, um den Hohlraum (12) in einer Richtung abzuschließen, und wobei wenigstens eine erste Antriebseinrichtung (24) die Formteile (4, 6) bezüglich einander bewegt, und eine zweite Antriebseinrichtung (22) die Blasdüseneinrichtung (14) gegenüber den Formteilen (4, 6) bewegt,
wenigstens ein Verschlusselement (4, 6, 8, 14, 16) oder wenigstens eine Antriebseinrichtung zum Betreiben einer Behandlungseinheit (9, 15) zum Behandeln der Vorformlinge während des Umformungsvorgangs durch eine elektrische Antriebseinrichtung (32, 34, 35, 36, 38, 39) und insbesondere einen Elektromotor bewegt wird, wobei die Antriebseinrichtungen durch eine Steuerungseinrichtung (60) gesteuert werden
**dadurch gekennzeichnet, dass**
ein für einen Umformungszustand charakteristischer Zustand durch wenigstens eine Sensoreinrichtung (62, 64, 66) der Vorrichtung (1) erfasst wird, wobei die Steuerungseinrichtung (60) wenigstens eine Antriebseinrichtung in Reaktion auf diesen Zustand steuert und mittels der Sensoreinrichtung erfasst wird, ob in die Blasform (2) ein Vorformling übergeben wurde, wobei die Steuereinrichtung (60) den Antriebseinrichtungen (22, 24, 28) die Anweisung gibt, die Blasform (2) nicht von dem geschlossenen Zustand in den geöffneten Zustand zu überführen, wenn in die Blasform (2) kein Vorformling übergeben wurde.

## Claims

1. An apparatus (1) for moulding plastics material preforms into plastics material containers, comprising at least one blow mould (2), wherein the apparatus (1) includes a plurality of closure members (4, 6, 7, 8, 14, 16) interacting with each other, in order to transfer the blow mould between an open state and a closed state in which the blow mould forms a cavity (12), within which the plastic preforms may be expanded into plastic containers, wherein the closure members comprise at least one first mould part (4) and one second mould part (6), wherein the first mould part (4) and the second mould part (6) may be moved with respect to one another between the closed position and the open position, and wherein the closure members (4, 6, 7, 8, 14, 16) further comprise a blow nozzle unit (14) which may be moved with respect to the mould parts (4, 6) and which closes the cavity (12) in the closed state in one direction, and wherein at least one first drive unit (24) is provided in order to move the mould parts with respect to one another, as well as one second drive unit (22), in order to move the blow nozzle unit (14) with respect to the mould parts, and wherein preferably at least one treatment unit (9, 15) for treating the preforms during the moulding operation is provided,
wherein at least one drive unit (22, 24, 26, 28) for moving at least one of the closure members (4, 6, 8, 14, 16) for transferring the blow mould (1) between the closed state and the open state or at least one drive unit (25, 29) for operating a treatment unit (9, 15) for treating the preforms during the moulding operation is an electric drive unit (32, 34, 35, 36, 38, 39) with a control unit (60) for controlling the drive unit,
**characterized in that**
the apparatus (1) comprises at least one sensor device (62, 64, 66) which detexts a state which is characteristic of a moulding state, wherein the control device (60) is designed in such a way that it controls at least one drive device in reaction to this state and the sensor device is designed for detection if a preform has been delivered to the blow mould (2), the control device (60) being designed in such a way that it gives instructions to the drive units (22, 24, 28) to not transfer the blow mould (2) from a closed state in an open state if no preform has been delivered to the blow mould (2).

2. The apparatus (1) as claimed in Claim 1, **characterised in that** it comprises a bottom part (8) which may be moved with respect to the mould parts (4, 6), in order to close the cavity (12) in one direction, as well as at least one third drive unit (26) for moving this bottom part (8) and/or a pressure mechanism (7) which is driven electrically for the mechanic stress of the blow mould (2).

3. The apparatus (1) as claimed in at least one of the preceding claims, **characterised in that** the closure members comprise a locking unit (16) which locks the mould parts to one another in a closed state of the blow mould, and preferably at least one fourth drive unit (26) for moving this locking unit.

4. The apparatus (1) as claimed in at least one of the preceding claims, **characterised in that** at least one treatment unit for treating the preforms within the context of the moulding operation includes a stretching rod (15) for stretching the plastic preforms, which stretching rod may be moved in a predetermined direction of movement, and a stop element is provided which determines an end position of this stretching rod (15) in the direction of movement (R), which stop element may be adjusted in the direction of movement of the stretching rod, and wherein an electric drive unit (23) for adjusting this stop element is provided.

5. The apparatus (1) as claimed in at least one of the preceding claims, **characterised in that** at least one treatment unit for treating the preforms within the context of the moulding operation is a gripping member for gripping the preforms and said gripping member includes an electric drive.

6. Apparatus (1) as claimed in at least one of the preceding claims,
**characterized in that**
the control device (60) is designed in such a way that it gives instructions to the drive devices (22, 24, 28) only for the passage of every second pitch.

7. Apparatus (1) as claimed in at least one of the preceding claims,
**characterized in that**
the control device (60) is designed in such a way that it gives instructions to the drive devices (22, 24, 28) only for the passage of every n^{th} pitch.

8. The apparatus (1) as claimed in at least one of the preceding claims, **characterised in that** the sensor device includes an oscillation sensor, which detects an upward swinging of the apparatus (1), wherein the control device (60) is designed in such a way that it controls at least one drive unit as a response to this state as to countervail the effect of the upward swinging.

9. The apparatus (1) as claimed in Claim 7, **characterised in that** the control unit (60) controls the movement of at least one closure member (4, 6, 8, 14, 16) as a function of the movement of a further closure member (4, 6, 8, 14, 16).

10. The apparatus (1) as claimed in at least one of the preceding claims, **characterised in that** the apparatus has at least one valve unit (52, 54, 56, 57, 58) in order to supply a gaseous medium to the containers as well as at least one further control unit (60, 70) for controlling this valve unit.

11. The apparatus (1) as claimed in claim 10, **characterised in that** the control unit controls both the valve units (52, 54, 56, 57, 58) and the drive units.

12. The apparatus (1) as claimed in at least one of the preceding claims, **characterised in that** the apparatus includes a plurality of blow moulding stations with blow moulds 2, which are guided along a support.

13. A method for moulding plastics material preforms into plastics material containers, wherein the plastics material preforms are disposed within a blow mould (2) and a plurality of closure members (4, 6, 8, 14, 16) interact in order to transfer the blow mould from an open state into a closed state in which the blow mould forms a cavity (12), inside of which the plastic preforms are to be expanded into plastic containers, wherein the closure members comprise at least one first mould part (4) and one second mould part (6), wherein the first mould part (4) and the second mould part (6) are moved with respect to each other between the closed position and the open position, and wherein the closure members (4, 6, 7, 8, 14, 16) further comprise a blow nozzle unit (14) which is moved with respect to the mould parts (4, 6), in order to close the cavity (12) in one direction, and wherein at least one first drive unit (24) moves the mould parts (4, 6) with respect to one another, and a second drive unit (22) moves the blow nozzle unit with respect to the mould parts (4, 6),
**characterised in that** at least one closure member (4, 6, 7, 8, 14, 16) or at least one drive unit for operating a treatment unit (9, 15) for treating the preforms during the moulding operation is moved by means of an electric drive unit and in particular by means of an electric motor,
wherein the drive units are controlled by a control device (60),
**characterized in that**
a state which is characteristic of a shaping state is detected by at least one sensor device (62, 64, 66) of the apparatus (1), wherein the control device (60) controls at least one drive device in response to this state and it is detected by means of the sensor device if a preform has been delivered to the blow mould (2), wherein the control device (60) gives instructions to the drive devices (22, 24, 28) not to transfer the blow mould (2) from a closed state into an open state if no preform has been transmitted into the blow mould (2).

## Revendications

1. Installation (1) pour la transformation de préformes en matière plastique en récipients en matière plastique, avec
au moins un moule de soufflage (2),
une pluralité d'éléments de fermeture (4, 6, 8, 14, 16) qui coopèrent ensemble pour faire passer le moule de soufflage d'un état d'ouverture à un état de fermeture où le moule de soufflage forme une cavité (12), à l'intérieur de laquelle les préformes en matière plastique peuvent être expansées de manière à obtenir des récipients en matière plastique, les éléments de fermeture comprenant au moins une première pièce de moule (4) et une deuxième pièce de moule (6), la première pièce de moule (4) et la deuxième pièce de moule (6) étant déplaçables l'une par rapport à l'autre entre la position de fermeture et la position d'ouverture, et les éléments de fermeture (4, 6, 8, 14, 16) comprenant en outre un dispositif à buse de soufflage (14) mobile par rapport aux pièces de moule (4, 6), et qui obture la cavité (12) dans une direction en état de fermeture,
au moins un premier dispositif d'entraînement (24) pour déplacer les pièces de moule (4, 6) l'une par rapport à l'autre,
un deuxième dispositif d'entraînement (22) pour déplacer le dispositif à buse de soufflage (14) par rapport aux pièces de moule (4, 6), et
préférentiellement au moins une unité de traitement (9, 15) pour le traitement des préformes pendant le processus de déformation,
dans laquelle au moins un dispositif d'entraînement (22, 24, 26, 28) pour le déplacement d'au moins un des éléments de fermeture (4, 6, 8, 14, 16) pour faire passer le moule de soufflage (1) de l'état de fermeture à l'état d'ouverture, ou au moins un dispositif d'entraînement (25, 29) pour entraîner une unité de traitement (9, 15) à traiter des préformes pendant le processus de déformation, est un dispositif d'entraînement électrique (32, 34, 35, 36, 38, 39) avec un dispositif de commande (60) pour la commande des dispositifs d'entraînement,
**caractérisée en ce que**
l'installation (1) comporte au moins un dispositif de détection (62, 64, 66) qui détecte un état caractéristique pour un état de déformation, le dispositif de commande (60) étant prévu de manière à commander au moins un dispositif d'entraînement en réaction à cet état et le dispositif de détection étant prévu pour détecter si une préforme a été transférée au moule de soufflage (2), le dispositif de commande (60) étant prévu pour délivrer aux dispositifs d'entraînement (22, 24, 28) l'instruction de ne pas faire passer le moule de soufflage (2) de l'état de fermeture à l'état d'ouverture si aucune préforme n'a été transférée au moule de soufflage (2).

2. Installation (1) selon la revendication 1,
**caractérisée en ce que**
celle-ci comprend une pièce de fond (8) mobile par rapport aux pièces de moule (4, 6) pour obturer la cavité (12) dans une direction, ainsi qu'au moins un troisième dispositif d'entraînement (26) pour déplacer ladite pièce de fond (8) et/ou un mécanisme de pression (7) à commande électrique destiné à soumettre le moule de soufflage (2) à une contrainte mécanique

3. Installation (1) selon au moins une des revendications précédentes,
**caractérisée en ce que**
les éléments de fermeture comprennent un dispositif de verrouillage (16) qui verrouille les pièces de moule (4, 6) en état de fermeture du moule de soufflage (2), ainsi que préférentiellement au moins un quatrième dispositif d'entraînement (26) pour le déplacement dudit dispositif de verrouillage.

4. Installation (1) selon au moins une des revendications précédentes,
**caractérisée en ce**
**qu'**au moins une unité de traitement pour le traitement des préformes lors du processus de déformation comporte une barre d'étirage (15) pour l'étirage des préformes en matière plastique, ladite barre d'étirage étant mobile dans une direction de déplacement définie et un élément de butée étant prévu, lequel définit une position finale de ladite barre d'étirage (15) en direction de déplacement (R), ledit élément de butée étant réglable dans la direction de déplacement de la barre d'étirage, et un dispositif d'entraînement électrique (23) étant prévu pour le réglage dudit élément de butée.

5. Installation (1) selon au moins une des revendications précédentes,
**caractérisée en ce**
**qu'**au moins une unité de traitement pour le traitement des préformes lors du processus de déformation est un élément de préhension pour la saisie des préformes, et en ce que ledit élément de préhension comporte un entraînement électrique.

6. Installation (1) selon au moins une des revendications précédentes,
**caractérisée en ce que**
le dispositif de commande (60) est réalisé de manière à ne délivrer l'instruction aux dispositifs d'entraînement (22, 24, 28) qu'au passage de chaque 2^{e} division.

7. Installation (1) selon au moins une des revendications précédentes,
**caractérisée en ce que**
le dispositif de commande (60) est réalisé de manière à ne délivrer l'instruction aux dispositifs d'entraînement (22, 24, 28) qu'au passage de chaque ne division.

8. Installation (1) selon au moins une des revendications précédentes,
**caractérisée en ce que**
le dispositif de détection comporte un capteur d'oscillations qui détecte une remontée de l'installation (1), le dispositif de commande (60) étant prévu pour commander au moins un dispositif d'entraînement en réaction à cet état, pour contrer l'effet de la remontée.

9. Installation (1) selon au moins une des revendications précédentes,
**caractérisée en ce que**
le dispositif de commande (60) commande les déplacements d'au moins un élément de fermeture (4, 6, 8, 14, 16) en fonction du déplacement d'un autre élément de fermeture (4, 6, 8, 14, 16).

10. Installation (1) selon au moins une des revendications précédentes,
**caractérisée en ce que**
ladite installation (1) comporte au moins un dispositif à vanne (52, 54, 56, 57, 58) pour délivrer un fluide gazeux aux récipients, ainsi qu'au moins un autre dispositif de commande (50) pour la commande dudit dispositif à vanne.

11. Installation (1) selon la revendication 10,
**caractérisée en ce que**
le dispositif de commande (60) commande les dispositifs à vanne (52, 54, 56, 57, 58) ainsi que les dispositifs d'entraînement.

12. Installation (1) selon au moins une des revendications précédentes,
**caractérisée en ce que**
ladite installation comporte une pluralité de stations de soufflage guidées sur un support avec des moules de soufflage (2).

13. Procédé de transformation de préformes en matière plastique en récipients en matière plastique, dans lequel les préformes en matière plastique sont disposées à l'intérieur d'un moule de soufflage (2) et dans lequel une pluralité d'éléments de fermeture (4, 6, 8, 14, 16) coopère pour faire passer le moule de soufflage d'un état d'ouverture à un état de fermeture où le moule de soufflage forme une cavité (12), à l'intérieur de laquelle les préformes en matière plastique peuvent être expansées de manière à obtenir des récipients en matière plastique, les éléments de fermeture comprenant au moins une première pièce de moule (4) et une deuxième pièce de moule (6), la première pièce de moule (4) et la deuxième pièce de moule (6) étant déplacées l'une par rapport à l'autre entre la position de fermeture et la position d'ouverture, et les éléments de fermeture (4, 6, 8, 14, 16) comprenant en outre un dispositif à buse de soufflage (14) déplacé par rapport aux pièces de moule (4, 6) pour obturer la cavité (12) dans une direction en état de fermeture, au moins un premier dispositif d'entraînement (24) déplaçant les pièces de moule (4, 6) l'une par rapport à l'autre, et un deuxième dispositif d'entraînement (22) déplaçant le dispositif à buse de soufflage (14) par rapport aux pièces de moule (4, 6),
au moins un élément de fermeture (4, 6, 8, 14, 16) ou au moins un dispositif d'entraînement pour entraîner une unité de traitement (9, 15) à traiter des préformes pendant le processus de déformation étant déplacés par un dispositif d'entraînement électrique (32, 34, 35, 36, 38, 39) et en particulier par un moteur électrique, les dispositifs d'entraînement étant commandés par un dispositif de commande (60),
**caractérisé en ce**
**qu'**un état caractéristique pour un état de déformation est détecté par au moins un dispositif de détection (62, 64, 66) de l'installation (1), le dispositif de commande (60) commandant au moins un dispositif d'entraînement en réaction à cet état et le dispositif de détection détectant si une préforme a été transférée au moule de soufflage (2), le dispositif de commande (60) délivrant aux dispositifs d'entraînement (22, 24, 28) l'instruction de ne pas faire passer le moule de soufflage (2) de l'état de fermeture à l'état d'ouverture si aucune préforme n'a été transférée au moule de soufflage (2).
